# EUROPÄISCHE PATENTSCHRIFT

(11) **EP 4 237 337 B1**
(45) Veröffentlichungstag und Bekanntmachung des Hinweises auf die Patenterteilung: **19.11.2025**
(21) Anmeldenummer: 21798593.6
(22) Anmeldetag: 18.10.2021
(51) Int. Cl.: B64G 1/24, B64G 1/40, B64G 1/62

(54) **VERFAHREN ZUR PLANUNG EINES SATELLITENMANÖVERS**
METHOD FOR PLANNING A SATELLITE MANEUVER
PROCÉDÉ DE PLANIFICATION D'UNE MANOEUVRE DE SATELLITE

(30) Priorität: 29.10.2020 DE 102020128507
(43) Veröffentlichungstag der Anmeldung: 06.09.2023
(73) Patentinhaber: Deutsches Zentrum für Luft- und Raumfahrt e.V., 53227 Bonn (DE)
(72) Erfinder: SCHARRING, Stefan, 70190 Stuttgart (DE); BERGMANN, Kevin, 52076 Aachen (DE); KÄSTEL, Jürgen, 71229 Leonberg (DE); LORBEER, Raoul-Amadeus, 71106 Magstadt (DE)
(74) Vertreter: RPK Patentanwälte Reinhardt und Kaufmann Partnerschaft mbB
(86) Internationale Anmeldenummer: PCT/EP2021/078821
(87) Internationale Veröffentlichungsnummer: WO 2022/089979

(56) Entgegenhaltungen:
- EP-A1- 3 543 150
- DE-A1- 19 848 737
- ECKEL HANS-ALBERT ET AL: "Concept for a Laser Propulsion Based Nanosat Launch System", AIP CONFERENCE PROCEEDINGS 702, 263 (2004), 1 January 2004 (2004-01-01), pages 263 - 273, XP055877384, Retrieved from the Internet <URL:https://aip.scitation.org/doi/pdf/10.1063/1.1721006> [retrieved on 20220110]
- PHIPPS CLAUDE ET AL: "Review: Laser-Ablation Propulsion", JOURNAL OF PROPULSION AND POWER., vol. 26, no. 4, 1 July 2010 (2010-07-01), US, pages 609 - 637, XP055877551, ISSN: 0748-4658, DOI: 10.2514/1.43733
- KARE JORDIN T.: "Pulsed laser thermal propulsion for interstellar precursor missions", AIP CONFERENCE PROCEEDINGS, vol. 504, 1 January 2000 (2000-01-01), NEW YORK, US, pages 1278 - 1284, XP055877522, ISSN: 0094-243X, Retrieved from the Internet <URL:https://aip.scitation.org/doi/pdf/10.1063/1.1290940> DOI: 10.1063/1.1290940
- LANDIS GEOFFREY A ET AL: "Space Transfer With Ground-Based Laser/Electric Propulsion", NASA TECHNICAL MEMORANDUM 106060 AIAA-92-3213, 1 July 1993 (1993-07-01), pages 1 - 18, XP055877568, Retrieved from the Internet <URL:https://ntrs.nasa.gov/api/citations/19930011426/downloads/19930011426.pdf> [retrieved on 20220111]
- "SPRINGER SERIES IN MATERIALS SCIENCE", vol. 274, 1 January 2018, SPRINGER, BERLIN, DE, ISSN: 0933-033X, article PHIPPS CLAUDE R.: "Laser Ablation Propulsion and Its Applications in Space", pages: 217 - 246, XP055877611, DOI: 10.1007/978-3-319-96845-2_8
- BOLONKIN A: "MULTI-REFLEX PROPULSION SYSTEMS FOR SPACE AND AIR VEHICLES AND ENERGY TRANSFER FOR LONG DISTANCE", JOURNAL OF THE BRITISH INTERPLANETARY SOCIETY, BRITISH INTERPLANETARY SOCIETY, LONDON, GB, vol. 57, no. 11/12, 1 November 2004 (2004-11-01), pages 379 - 390, XP001210176, ISSN: 0007-084X

## Beschreibung

### Stand der Technik

Die Erfindung betrifft ein Verfahren zur Planung eines Satellitenmanövers in Form einer Bahnänderung einer Satellitenbahn nach Abschluss einer Mission, wobei der Satellit eine Antriebseinheit mit bodengestützter Energieversorgung aufweist. Die Erfindung betrifft ferner ein Computer-Programm-Produkt zur Planung eines Satellitenmanövers, sowie ein Datenverarbeitungssystem.

Das sogenannte Post-Mission-Disposal (PMD) ist die letzte Phase einer Satellitenmission. Dabei wird der Satellit aus seiner angestammten Satellitenbahn entfernt, um diese für die Nutzung durch zukünftige Raumfahrtmissionen freizugeben. Für erdnahe Satelliten geschieht dies üblicherweise durch einen gezielten Wiedereintritt in die tiefere Erdatmosphäre, was auch stets von einer Zerstörung des Satelliten begleitet wird. Dadurch gehen auch alle auf dem Satelliten eingesetzten Ressourcen unwiederbringlich verloren, sodass die Kosten für deren Beschaffung und Installation bei jeder Mission erneut anfallen.

Um diese Kosten zu reduzieren, werden neue Antriebstechnologien entwickelt, mit dem Ziel, die Masse und technische Komplexität des Antriebssystems zu reduzieren. In diesem Zusammenhang weist ein möglicher Einsatz eines Antriebsverfahrens mit bodengestützter Energieversorgung Potential auf, das die Begrenzungen chemischer wie elektrischer Antriebe auf die im Orbit verfügbaren Ressourcen an Treibstoff, gespeicherter Energie sowie eingestrahlter Sonnenenergie um ein Vielfaches übersteigen kann.

Laser-ablative Schuberzeugung ist ein Prozess, bei dem ein fester oder flüssiger Treibstoff durch intensive, gepulste Laserstrahlung abgetragen (ablatiert) wird, um den Rückstoß des resultierenden Treibstrahls zur Schuberzeugung zu nutzen. Die Laserstrahlquelle kann sich dabei sowohl auf dem Satelliten selbst, als auch auf einer separaten Plattform befinden, wobei der Satellit im letzteren Falle über entsprechende Möglichkeiten zum Strahleinfang und zur Strahlführung verfügen muss.

Die auf dem Satelliten benötigten Komponenten weisen dabei nur eine geringe Komplexität auf. Eine hinreichend große Intensität der Laserpulse vorausgesetzt, welche durch eine hohe räumliche Fokussierung der Strahlung oder die Verwendung von Pulsdauern innerhalb und unterhalb des sogenannten Kurzpulsbereiches erreichbar ist, kann im Grunde jedes Material als Treibstoff eingesetzt werden. In der Praxis werden hierfür u.a. einfache Blöcke aus Kunststoffen oder Metallen betrachtet, wovon sich in beiden Fällen ungefährliche und günstige Materialien finden lassen. Dieses Prinzip bietet dabei den Vorteil, dass sich der resultierende Schub und der spezifische Impuls innerhalb einer solchen laser-ablativen Antriebseinheit unabhängig voneinander einstellen lassen. Der spezifische Impuls kann dabei durch die Stärke der Fokussierung des Laserlichtes auf dem Ablationskörper und der im Mittel erzeugte Schub durch die Anzahl der pro Sekunde ausgesendeten Laserpulse (Repetitionsrate) über mehrere Größenordnungen hinweg angepasst werden.

Damit lassen sich entsprechend der jeweiligen Missionsanforderungen Antriebe mit hohem Schub oder geringem spezifischen Massenverbrauch realisieren.

Zudem ermöglichen es diese Antriebe prinzipiell auch, die Laserstrahlquelle aus dem Antrieb heraus zu verlagern und somit die Energieerzeugung und Energienutzung räumlich voneinander zu trennen. Auf diese Weise kann die Laserstrahlquelle für mehrere PMD-Phasen wiederverwendet und ein Großteil der technischen Komplexität des Antriebs von dem Satelliten ausgelagert werden.

Durch die Auslagerung der Laserstrahlquelle auf eine Bodenstation ist eine praktisch unbegrenzte Wiederverwendbarkeit gegeben. Die Laserstrahlquelle ist jederzeit für Reparaturmaßnahmen erreichbar, die Energiebereitstellung ist praktisch nicht limitiert.

Aus den Veröffentlichungen von Eckel, H. et al, "Concept for a Laser Propulsion Based Nanosat Launch System", AIP Conference Proceedings 702, 263 (2004), 1. Januar 2004, Seiten 263-273, und von Phipps, C. et al, "Review: Laser-Ablation Propulsion", JOURNAL OF PROPULSION AND POWER., Bd. 26, Nr. 4, 1. Juli 2010, Seiten 609-637, sind Verfahren zur Planung von Satellitenmanövern bekannt, bei dem Laserpulse über eine Übertragungsstrecke von einer Bodenstation zu einem Satelliten ausgesendet werden.

### Offenbarung der Erfindung

Die Aufgabe der Erfindung ist es, ein verbessertes Verfahren zur Planung eines Satellitenmanövers in Form einer Bahnänderung einer Satellitenbahn nach Abschluss einer Mission, anzugeben.

Eine weitere Aufgabe ist es, ein Computer-Programm-Produkt für ein solches Verfahren anzugeben.

Eine weitere Aufgabe ist es, ein Datenverarbeitungssystem zur Durchführung eines solchen Verfahrens anzugeben.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Nach einem Aspekt der Erfindung wird ein computerimplementiertes Verfahren zur Planung eines Satellitenmanövers in Form einer Bahnänderung einer Satellitenbahn nach Abschluss einer Mission nach Anspruch 1 vorgeschlagen, wobei der Satellit eine Antriebseinheit mit bodengestützter Energieversorgung aufweist. Das Verfahren umfasst wenigstens die Schritte Konfigurieren wenigstens eines bodengestützten Lasersystems zur Erzeugung eines Laserstrahls, insbesondere von Laserpulsen; Konfigurieren wenigstens einer Laser-Bodenstation einschließlich des wenigstens einen Lasersystems; Auslegen einer optischen Übertragungsstrecke zum Übertragen der Laserpulse von der wenigstens einen Bodenstation zum Satelliten; Konfigurieren der satellitengestützten Antriebseinheit, insbesondere eines Ablationsantriebs, bei welchem mittels der Laserpulse Masse von der Antriebseinheit abgetragen wird; sowie Bestimmen einer mittels der Antriebseinheit erreichbaren Bahnkurve. Dabei werden die Schritte in einer Iteration so lange durchlaufen, bis die gewünschte Bahnänderung erreicht ist.

Beim Durchlaufen der Iteration zum Bestimmen der Bahnkurve werden wenigstens die Schritte durchgeführt: Initialisieren einer Konfiguration der Antriebseinheit mit Daten einer ersten Analyse der optischen Übertragungsstrecke; Abgleich von berechneten Bahndaten des Satelliten mit Anforderungen der Mission; Iterieren der Konfiguration der Antriebseinheit, der Konfiguration des Lasersystems, sowie der optischen Übertragungsstrecke in einer numerischen Simulation, bis eine Übereinstimmung der berechneten Bahndaten mit den Anforderungen der Mission innerhalb vorgegebener zulässiger Toleranzen erreicht ist. Auf diese Weise ist eine vorteilhafte Ausführung der Berechnungen zur Auslegung der Laser-Bodenstation, der Antriebseinheit des Satellit, sowie der optischen Übertragungsstrecke möglich, um eine gewünschte Bahnänderung des Satelliten für ein PMD-Manöver zu bestimmen.

Mit dem erfindungsgemäßen Verfahren können zahlreiche Wechselbeziehungen an Randbedingungen berücksichtigt werden. Die Berechnung einer bodengestützten laser-ablativen PMD-Phase wird ermöglicht. Dieses Vorgehen kann dabei sowohl experimentelle Daten als auch analytische Näherungen und numerische Simulationen beispielsweise mit einem üblichen Bahnpropagator verwenden. Vorteilhaft können Wechselwirkungen unterschiedlicher Randbedingungen von Satellit, Mission und/oder Bodeninfrastruktur berücksichtigt werden.

Vorteilhaft kann so die Missionsarchitektur spezifisch für exemplarische Satellitenklassen und eine genau definierte Satellitenbahn untersucht werden. Dadurch kann die Detailtiefe bei der Entwicklung der Missionsarchitektur gegenüber dem Stand der Technik deutlich erhöht und erheblich mehr Wechselbeziehungen berücksichtigt werden.

Vorteilhaft können an der Durchführung eines PMD-Manövers auch mehrere Bodenstationen beteiligt sein, z.B. in einem internationalen Netzwerk für eine bessere orbitale Abdeckung oder regional für Redundanz bzgl. witterungsbedingter Einschränkungen.

Dabei kann ein Lasersystem einen Laser oder mehrere, bis hin zur Kopplung einer Vielzahl von Lasern, umfassen.

Die Kombination aus den Annahmen zur Strahlpropagation und der Auslegung einer Bodenstation und der daraus resultierenden Einflüsse auf den Satelliten, ausgehend von der Empfängeroptik über die Schuberzeugung und die Bahnmechanik bis zur Ausgangsleistung der Bodenstation, erlaubt so eine vorteilhafte Planung von Bahnänderungen einer PMD-Phase.

Die Kombination aus Laser-Bodenstation und Satellit kann zunächst mit Hilfe einfacher analytischer Abschätzungen abgeleitet werden. Dabei wird unter Berücksichtigung atmosphärischer Effekte zunächst eine Auslegung der Bodenstation abgeleitet, welche einen möglichst geringen Strahldurchmesser auf allen betrachteten Satellitenbahnen ermöglicht. Daraus kann eine geeignete Empfängeroptik auf dem Satellit abgeleitet werden, welche einen möglichst guten Kompromiss zwischen Gewicht und Konstruktionsaufwand auf dem Satellit ermöglicht.

Mit den auf diese Weise abgeleiteten Ergebnissen kann dann die Effizienz der Energieübertragung zwischen Satellit und Laser-Bodenstation abgeschätzt werden.

Mit analytischen Beziehungen kann eine Vorauslegung des Lasersystems der Bodenstation bezüglich der erforderlichen Repetitionsrate und Ausgangsleistung durchgeführt werden. Dies ermöglicht eine Abschätzung des Leistungsbedarfes zur Einhaltung einer geforderten PMD-Dauer, sowie der dafür insgesamt zu ablatierenden Masse der Antriebseinheit auf dem Satelliten und maximal zu erwartenden Wärmeeinkopplung in den Ablationskörper. Dabei kann ein Referenz-Übertragungszustand betrachtet werden, um eine Vorauslegung der Laser-Bodenstation und des Satelliten zu ermöglichen.

Das auf diese Weise abgeleitete Antriebssystem kann anschließend mithilfe des Bahnpropagationstools iterativ angepasst werden. Die entsprechende Software verwendet dabei diverse Näherungsfunktionen, um real auftretende, aber im Rahmen der analytischen Formeln nur schwer erfassbare, nichtlineare Effekte akkurat zu modellieren, z.B. die Abhängigkeit der Energieübertragungseffizienz vom Zenitwinkel zwischen Satellit und Laser-Bodenstation und Orbitaldynamiken. Nach einem definierten Vorgehen kann damit die real benötigte Ausgangsleistung der Laser-Bodenstation, sowie der real auftretende Massenbedarf und die dabei entstehenden Wärmelasten ermittelt werden.

Mithilfe dieser Ergebnisse kann dann eine reale Auslegung einer möglichen Antriebseinheit abgeleitet werden. Dabei können auch Aspekte des Kontaminationsschutzes bezüglich der Laserablation berücksichtigt werden. Mithilfe des abgeleiteten Antriebsdesigns kann dann die Masse des gesamten Antriebssystems auf dem Satellit abgeschätzt werden.

Nach einer günstigen Ausgestaltung des Verfahrens kann das Konfigurieren des wenigstens einen Lasersystems wenigstens einen oder mehrere der Parameter umfassen: Pulsenergie, Pulswiederholrate, mittlere Laserleistung, Pulsdauer, Wellenlänge, Strahlparameterprodukt. Damit ist eine vorteilhafte Auslegung des Lasersystems zur Energieversorgung der Antriebseinheit auf dem Satelliten möglich.

Nach einer günstigen Ausgestaltung des Verfahrens kann das Konfigurieren der wenigstens einen Bodenstation wenigstens einen oder mehrere der Parameter umfassen: Ort und Höhe der Bodenstation über Meeresspiegel, Verfügbarkeit des Laserstrahls des Lasersystems aufgrund von Wetterbedingungen. Damit kann die Energieausnutzung des Lasersystems für die optische Übertragungsstrecke verbessert und die Zuverlässigkeit des Verfahrens unter wechselnden Wetterbedingungen erhöht werden.

Nach einer günstigen Ausgestaltung des Verfahrens kann das Auslegen der optischen Übertragungsstrecke wenigstens einen oder mehrere der Parameter umfassen: Durchmesser eines optischen Übertragungssystems, Unsicherheit und/oder zulässige Fehlertoleranzen der Laserstrahlverfolgung, Strahlausrichtungsschwankungen, Kompensation von Turbulenzen, Durchmesser eines optischen Empfangssystems. Auf diese Weise ist es vorteilhaft möglich, die Leistungsfähigkeit der optischen Übertragungsstrecke zu erhöhen, um den Antrieb des Satelliten zu verbessern.

Nach einer günstigen Ausgestaltung des Verfahrens kann das Konfigurieren der Antriebseinheit wenigstens einen oder mehrere der Parameter umfassen: Material eines Ablationskörpers an der Antriebseinheit, Größe eines Laserpunkts an der Antriebseinheit.

Durch eine Verbesserung der Wechselwirkung zwischen Material des Ablationskörpers der Antriebseinheit auf Grund der Materialauswahl für den Ablationskörper und dem eingestrahlten Laserlicht kann die Leistung der Antriebseinheit wirksam erhöht werden.

Nach einer günstigen Ausgestaltung des Verfahrens kann zum Konfigurieren der Antriebseinheit eine Wechselwirkung des Laserstrahls mit dem Material des Ablationskörpers analysiert und/oder optimiert werden. Durch eine Verbesserung der Wechselwirkung zwischen Material des Ablationskörpers der Antriebseinheit und dem eingestrahlten Laserlicht kann die Leistung der Antriebseinheit wirksam erhöht werden.

Nach einer günstigen Ausgestaltung des Verfahrens kann eine Analyse der optischen Übertragungsstrecke unter Randbedingungen wenigstens bezüglich eines Überflugs des Satelliten über die wenigstens eine Bodenstation und/oder bezüglich der Mission und/oder bezüglich des Lasersystems durchgeführt werden. Auf diese Weise können alle wesentlichen Randbedingungen berücksichtigt werden, um die optische Übertragungsstrecke möglichst vorteilhaft auszulegen und auch zu benutzen.

Nach einer günstigen Ausgestaltung des Verfahrens können Bewertungsfaktoren für die Analyse der optischen Übertragungsstrecke wenigstens eine oder mehrere der Bedingungen umfassen: Randbedingungen bezüglich des Laserstrahls, insbesondere eine Strahlqualität, optische Durchmesser des Laserstrahls beim Senden und/oder Empfangen, eine Leistungsfähigkeit einer adaptiven Optik, eine Ungenauigkeit beim Ausrichten des Laserstrahls, Randbedingungen bezüglich der Überflugbedingungen, insbesondere eine Bahnneigung und/oder Höhe, ein Ort und/oder Höhe des Lasersystems, ortsspezifische Wetterbedingungen wie Wolkenbedeckung und/oder Abschwächung durch Aerosole, eine minimale Elevation des Laserstrahls, die Konfiguration des Lasersystems, insbesondere Pulsenergie, Pulswiederholrate, Pulslänge, Wellenlänge. Auf diese Weise können alle wesentlichen Randbedingungen berücksichtigt werden, um die optische Übertragungsstrecke möglichst vorteilhaft auszulegen und auch zu benutzen.

Nach einer günstigen Ausgestaltung des Verfahrens kann für die Analyse der optischen Übertragungsstrecke eine Simulation der optischen Übertragungsstrecke durchgeführt werden, wobei wenigstens die Schritte durchgeführt werden: Analysieren der Überflugbedingungen mit passender Elevation des Laserstrahls; Analysieren einer Dauer einzelner Missionsphasen; Analysieren der Übertragung der Laserleistung.

Damit kann beispielsweise eine mittlere Dauer der Überflugphase, eine benötigte Geschwindigkeitsreduzierung pro Überflug, sowie eine Effizienz der optischen Übertragungsstrecke bestimmt werden.

Nach einer günstigen Ausgestaltung des Verfahrens können für eine Simulation der Antriebseinheit weiter die Schritte durchgeführt werden: Analysieren der Wechselwirkung des Laserstrahls mit dem Material des Ablationskörpers der Antriebseinheit auf Basis der Konfiguration des Lasersystems, insbesondere von geeigneten Lasertypen bezüglich Pulsdauer und Wellenlänge, und/oder von Wechselwirkungsdaten zwischen Laserstrahl und Ablationskörper bezüglich übertragenem Impuls und entstehender Wärmeentwicklung; Optimieren einer Oberflächenfluenz, also einer eingestrahlten Energie pro Flächeneinheit, auf Basis der verfügbaren Konfiguration des Lasersystems, insbesondere der Pulsenergie und der Pulswiederholrate; Konzipieren der Mission und Analysieren der Leistung. Dabei können die Simulationsschritte iteriert werden, bis eine genügende Verfeinerung der Parameter innerhalb von zulässigen Toleranzen erreicht ist. Damit lassen sich vorteilhaft die wesentlichen Leistungsdaten der Antriebseinheit bestimmen, die für eine günstige Bahnänderung des Satelliten für PMD-Phase benötigt werden. Beispielsweise können eine günstige Kombination von Lasersystem und Ablationsmaterial, die Fluenz der eingetragenen Energie pro Flächeneinheit am Arbeitspunkt sowie eine vorläufige Spezifikation der Antriebseinheit bestimmt werden.

Nach einer günstigen Ausgestaltung des Verfahrens können für eine Simulation des Satellitenmanövers weiter die Schritte durchgeführt werden Berechnen der Satellitenbahn in ersten Zeitschritten, insbesondere auf Minutenbasis; Abgleich mit Randbedingungen bezüglich der Mission und/oder des Überflugs über die wenigstens eine Bodenstation; Berechnen der Satellitenbahn in zweiten, kleineren Zeitschritten, insbesondere auf Sekundenbasis oder angepasst an eine Repetitionsrate des wenigstens einen Lasersystems; Abgleich mit Randbedingungen bezüglich der Lasereinstrahlung auf den Ablationskörper; Simulieren des Satellitenmanövers. Dabei können die Schritte iterativ durchgeführt werden, bis eine Übereinstimmung innerhalb von zulässigen Toleranzen mit den Randbedingungen der Mission des Satelliten und/oder der Überflugbedingungen des Satelliten und/oder der Lasereinstrahlung erreicht wird. Auf diese Weise können vorteilhaft beispielsweise eine Historie der Satellitenmanöver und eine Gesamtschau der Mission erstellt werden.

Nach einer günstigen Ausgestaltung des Verfahrens kann nach dem Berechnen der Satellitenbahn in ersten, großen Zeitschritten, falls keine Übereinstimmung mit den Randbedingungen der Mission besteht, die Simulation abgebrochen werden. Anderenfalls kann, falls keine Übereinstimmung mit den Randbedingungen der Überflugbedingungen besteht, das Berechnen der Satellitenbahn in ersten, großen Zeitschritten fortgeführt werden. Falls Übereinstimmung mit den Überflugbedingungen besteht, kann mit dem Berechnen der Satellitenbahn in zweiten, kleineren Zeitschritten fortgefahren werden. Falls im Verlauf dieser Berechnung die Bedingungen für Laserbestrahlung gegeben sind, kann die Berechnung eines laserbasierten Bahnmanövers erfolgen.

Nach einer günstigen Ausgestaltung des Verfahrens kann bei dem Berechnen der Satellitenbahn in zweiten, kleineren Zeitschritten, falls keine Übereinstimmung mit den Randbedingungen bezüglich der Lasereinstrahlung auf den Ablationskörper besteht, die Überprüfung auf die Randbedingungen der Überflugbedingungen im nächsten Zeitschritt erneut durchgeführt werden.

Anderenfalls kann mit dem Simulieren des Satellitenmanövers fortgefahren werden. So kann eine Bestimmung von benötigten Bahnänderungen für eine PMD-Phase vorteilhaft mit der geforderten Genauigkeit durchgeführt werden und die Auslegung der bodengestützten Antriebseinheit weiter optimiert werden.

Nach einem weiteren Aspekt der Erfindung wird ein Computer-Programm-Produkt zur Planung eines Satellitenmanövers nach Anspruch 14 vorgeschlagen.

Das Computer-Programm-Produkt ermöglicht vorteilhaft die Umsetzung des erfindungsgemäßen Verfahrens, mittels welchem bei der Planung eines Satellitenmanövers so viele Wechselbeziehungen an Randbedingungen wie nur möglich berücksichtigt werden können. Dafür wurde ein genereller Ablauf geschaffen, welcher die Berechnung einer bodengestützten laser-ablativen PMD-Phase ermöglicht. Dieses Vorgehen verwendet dabei sowohl experimentelle Daten als auch analytische Näherungen und numerische Simulationen beispielsweise mit einem üblichen Bahnpropagator.

Vorteilhaft kann so die Missionsarchitektur spezifisch für exemplarische Satellitenklassen und eine genau definierte Satellitenbahn untersucht werden. Dadurch kann die Detailtiefe bei der Entwicklung der Missionsarchitektur gegenüber dem Stand der Technik deutlich erhöht und erheblich mehr Wechselbeziehungen berücksichtigt werden.

Nach einem weiteren Aspekt der Erfindung wird ein Datenverarbeitungssystem zur Ausführung eines Datenverarbeitungsprogramms nach Anspruch 15 vorgeschlagen.

Das Datenverarbeitungssystem dient vorteilhaft zur Implementierung und Ausführung des oben beschriebenen erfindungsgemäßen Verfahrens zur Planung eines Satellitenmanövers, insbesondere zur Planung einer Bahnänderung einer Satellitenbahn nach Abschluss einer Mission.

### Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine schematische Darstellung eines verteilten Antriebssystems eines Satelliten als Basis für ein Verfahren zur Planung eines Satellitenmanövers nach einem Ausführungsbeispiel der Erfindung;
- Fig. 2: eine schematische Darstellung eines Satelliten mit einer Antriebseinheit mit bodengestützter Energieversorgung für das erfindungsgemäße Verfahren;
- Fig. 3: Randbedingungen bei der Durchführung des erfindungsgemäßen Verfahrens;
- Fig. 4: ein Ablaufdiagramm des erfindungsgemäßen Verfahrens;
- Fig. 5: ein Ablaufdiagramm zum Analysieren und Auslegen einer optischen Übertragungsstrecke nach dem erfindungsgemäßen Verfahren;
- Fig. 6: ein Ablaufdiagramm zum Konfigurieren einer satellitengestützten Antriebseinheit nach dem erfindungsgemäßen Verfahren;
- Fig. 7: ein Ablaufdiagramm zum Durchführen von numerischen Simulationen nach dem erfindungsgemäßen Verfahren; und
- Fig. 8: ein Systemdiagramm der numerischen Simulation nach dem erfindungsgemäßen Verfahren.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

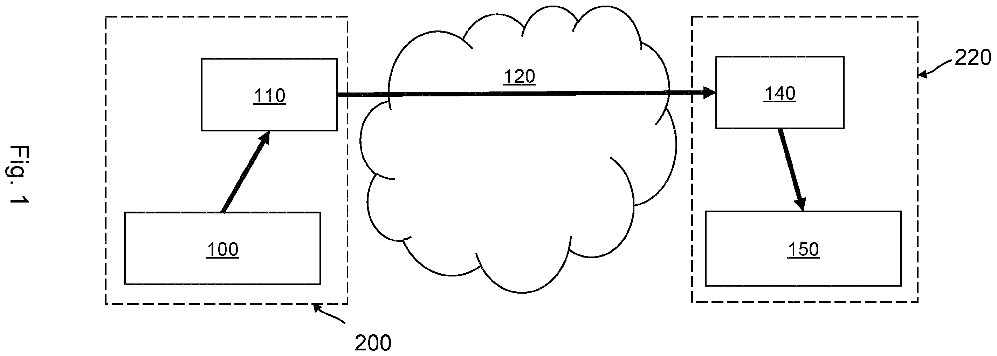

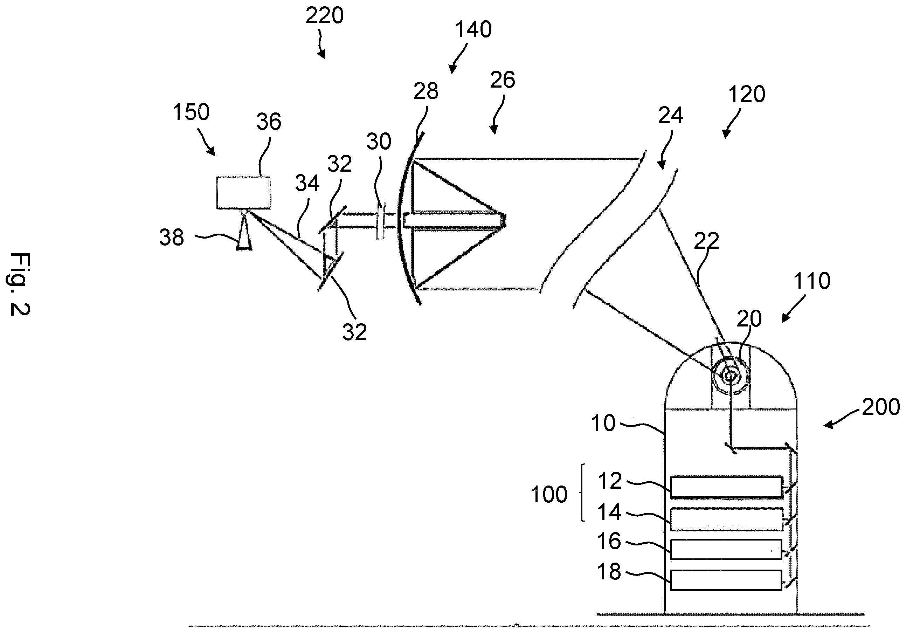

Figur 1 zeigt eine schematische Darstellung eines verteilten Antriebssystems eines Satelliten 220 als Basis für ein Verfahren zur Planung eines Satellitenmanövers nach einem Ausführungsbeispiel der Erfindung. Figur 2 ist dazu eine schematische Darstellung des Satelliten 220 mit einer Antriebseinheit 150 mit bodengestützter Energieversorgung für das erfindungsgemäße Verfahren erkennbar.

Das verteilte Antriebssystem umfasst ein Lasersystem 100 in einer Bodenstation 200 (Figur 2), welches Laserpulse mittels eines geeigneten Übertragungssystems 110 von der Bodenstation 200 über eine optische Übertragungsstrecke 120 an ein Empfangssystem 140 des Satelliten 220 und die Antriebseinheit 150 sendet.

Das Lasersystem 100 der in dem Ausführungsbeispiel in Figur 2 näher dargestellten Bodenstation 200 umfasst zwei Laser 12, 14, welche Laserpulse über eine Optik 20 eines Teleskops 10 in Richtung des Satelliten 220 aussenden. Jedoch kann eine Bodenstation auch mehrere Laser umfassen. Auch können mehrere Laser in geeigneter Weise gekoppelt werden. Das Teleskop 10 kann beispielsweise einen Coudé-Pfad zur Strahllenkung aufweisen und mit einem Ritchey-Chretien-Teleskop 26 gekoppelt sein, welches den vom Teleskop 10 ausgesendeten Laserstrahl 22 einfängt und bündelt.

Die Bodenstation 200 weist ferner zur Ausrichtung des Lasersystems 100 einen Leitstern-Laser 18 sowie einen Tracking-Laser 16 auf, deren Laserstrahlen ebenfalls über die Optik 20 übertragen werden.

Der Laserstrahl 22 wird durch die Atmosphäre 24 zum Satelliten 220 übertragen und von diesem über das Teleskop 26 empfangen, welches einen Strahlfang 28 als sphärischen Spiegel aufweist. Der durch die Übertragung durch die Atmosphäre aufgeweitete Laserstrahl 22 wird durch das Teleskop 26 gebündelt und als Laserstrahl 34 auf den Ablationskörper 36 der Antriebseinheit 150 geleitet.

Dabei kann der Laserstrahl 34 mittels einer geeigneten Strahlführung 30 über Umlenkspiegel 32 auf den Ablationskörper 36 der Antriebseinheit 150 fokussiert werden, wo er durch Aufheizen der Oberfläche des Ablationskörpers 36 einen Ablationsstrahl 38 erzeugt. Der an sich unerwünschte Nebeneffekt des anschließenden Aufheizens des gesamten Materials trägt zum Antriebsprozess nichts bei und kann durch geeignetes thermisches Management kontrolliert werden.

Durch den Impuls des Ablationsstrahls 38 kann der Satellit 220 je nach Ausrichtung der Antriebseinheit 150 grundsätzlich beschleunigt oder gebremst werden. Eine Beschleunigung würde allerdings zu einer Anhebung der Bahn führen. Für PMD-Manöver ist hingegen in der Regel eine Absenkung wünschenswert, also ein Bremsmanöver erforderlich.

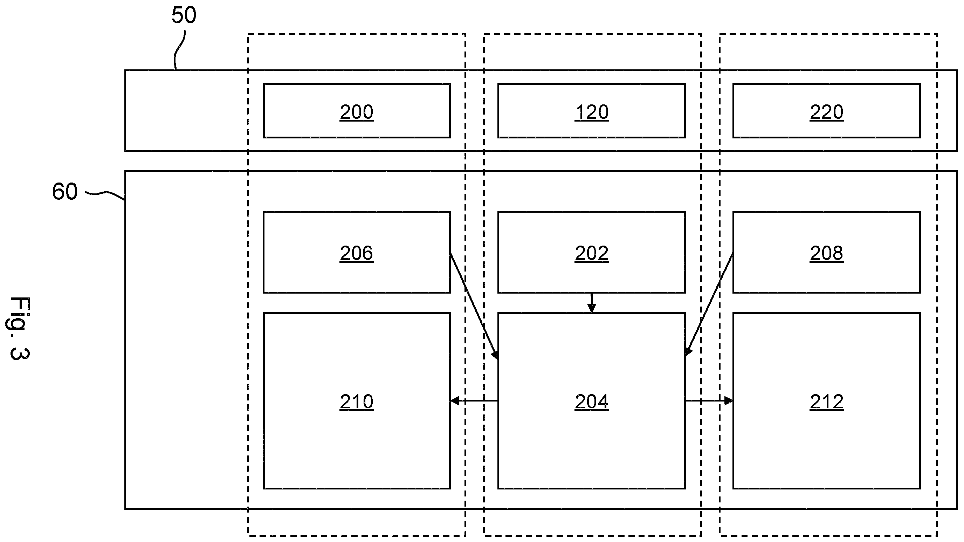

In Figur 3 sind Randbedingungen bei der Durchführung des erfindungsgemäßen Verfahrens dargestellt. Die zu berücksichtigenden Einrichtungen 50 umfassen die Bodenstation 200, die optische Übertragungsstrecke 120 sowie den Satellit 220.

Prozeduren 204 des erfindungsgemäßen Verfahrens erhalten als Eingabe statische Parameter 206 der Bodenstation 200, wie beispielsweise den Ort, eine Apertur des Teleskops 10, die Leistung des Lasersystems 100, weiter dynamische Parameter 202 der optischen Übertragungsstrecke 120, wie beispielsweise den Ort und das Wetter, sowie statische Parameter 208 des Satelliten 220, wie beispielsweise die Satellitenbahn 230 und eine Apertur des empfangenden Teleskops 26. Für das erfindungsgemäße Verfahren kann auch ein Netzwerk aus mehreren Bodenstationen 200 vorteilhaft eingesetzt werden.

Mittels der Prozeduren 204 werden nach dem erfindungsgemäßen Verfahren dynamische Parameter 210 der Bodenstation 200, wie beispielsweise eine Ausrichtung des Laserstrahls 22, eine Pulsdauer, Pulsenergie, und eine Kadenz, also eine Pulswiederholrate des Lasersystems 100, bestimmt. Weiter werden dynamische Parameter 212 des Satelliten 220, wie beispielsweise Ausrichtung des Satelliten 220, Beschleunigung und Wärmeentwicklung der Antriebseinheit 150 bestimmt.

Statische Parameter sind dabei vorausgesetzt, dynamische Parameter sind in den Prozeduren 204 zu ermitteln.

Für die Planung des Satellitenmanövers werden Bahnparameter und Wetterdaten in einer Simulation statistisch untersucht. Die Algorithmen in den Prozeduren 204 können zusätzlich während des Manövers zur dynamischen Anpassung der dynamischen Größen (z.B. Pulsenergie oder Satellitenausrichtung) eingesetzt werden.

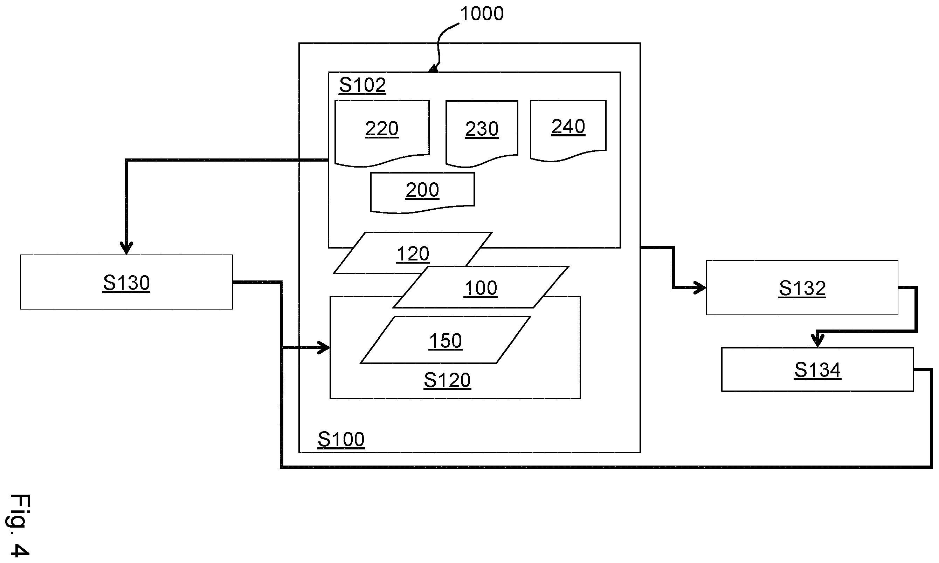

Figur 4 zeigt ein Ablaufdiagramm des erfindungsgemäßen Verfahrens.

Das Verfahren zur Planung eines Satellitenmanövers, insbesondere zur Planung einer Bahnänderung einer Satellitenbahn nach Abschluss einer Mission 240, ist in der Figur schematisch dargestellt.

Die Konfiguration bei dem beschriebenen Ausführungsbeispiel weist den Satelliten 220 mit einer Antriebseinheit 150 mit bodengestützter Energieversorgung, sowie eine oder mehrere Laser-Bodenstationen 200 mit dem Lasersystem 100 auf.

Das Verfahren umfasst wenigstens die folgenden Schritte.

Ein bodengestütztes Lasersystem 100 zur Erzeugung eines Laserstrahls, insbesondere von Laserpulsen wird konfiguriert. Weiter wird eine Laser-Bodenstation 200 einschließlich des Lasersystems 100 konfiguriert. Ferner wird eine optische Übertragungsstrecke 120 zum Übertragen der Laserpulse von der Bodenstation 200 zum Satelliten 220 ausgelegt. Die satellitengestützte Antriebseinheit 150 wird konfiguriert, wobei die Antriebseinheit 150 insbesondere als Ablationsantrieb ausgebildet ist, bei welchem mittels der Laserpulse Masse von der Antriebseinheit 150 abgetragen wird. Damit wird eine mittels der Antriebseinheit 150 erreichbare Bahnkurve des Satelliten 220 bestimmt. Diese Schritte werden in einer Iteration so lange durchlaufen, bis die gewünschte Bahnänderung zumindest innerhalb zulässiger Toleranzen erreicht ist.

Beim Durchlaufen der Iteration zum Bestimmen der Bahnkurve für die PMD-Phase des Satelliten 220 werden mehrere Schritte durchgeführt. Es erfolgt ein Initialisieren einer Konfiguration der Antriebseinheit 150 mit Daten einer ersten Analyse der optischen Übertragungsstrecke 120. Berechnete Bahndaten des Satelliten 200 mit Anforderungen der Mission 240 werden abgeglichen. Es erfolgt weiter ein Iterieren der Konfiguration der Antriebseinheit 150, der Konfiguration des Lasersystems 100, sowie der optischen Übertragungsstrecke 120 in einer numerischen Simulation, bis eine Übereinstimmung der berechneten Bahndaten mit den Anforderungen der Mission 240 innerhalb vorgegebener zulässiger Toleranzen erreicht ist.

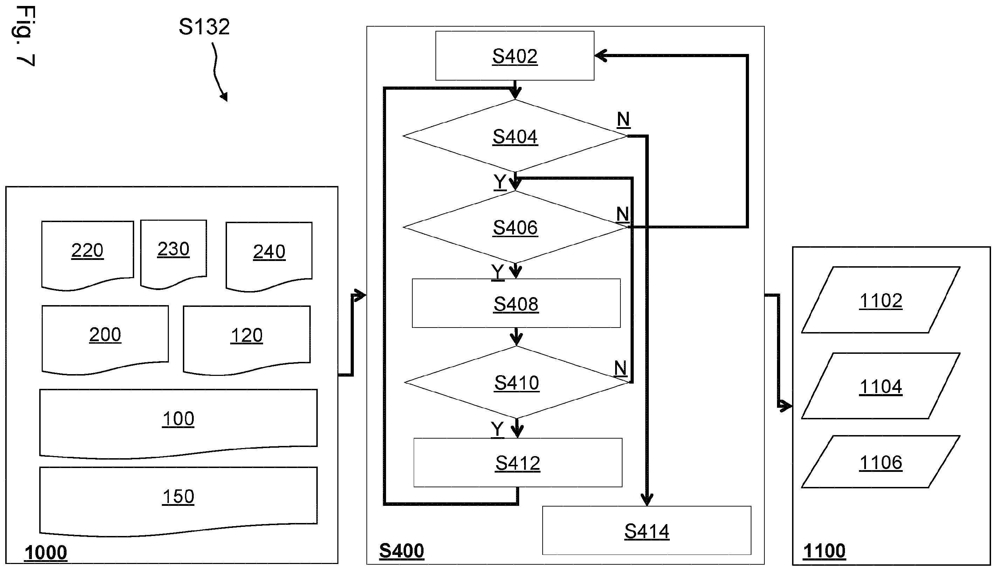

Bei dem in Figur 4 dargestellten Ausführungsbeispiel wird ein Gesamtsystem 1000 aus Laser-Bodenstation 200, optischer Übertragungsstrecke 120 und Satellit 220 (siehe Figur 7) jeweils in einer Schleife S100 berechnet. Der Zyklus startet in Schritt S130 mit einer analytischen Berechnung der optischen Übertragungsstrecke 120 unter Berücksichtigung der Analyse S102 der optischen Übertragungsstrecke 120 umfassend den Satelliten 220, die Satellitenbahn 230, die Missionsdaten 240 sowie der Laser-Bodenstation 200. Das Ergebnis der Berechnung fließt als Initialisierung in eine Konfigurationsberechnung der Antriebseinheit 150 im Schritt S120.

Mit dieser Gesamtkonfiguration wird in Schritt S132 eine numerische Simulation (in Figur 7 detailliert dargestellt) durchgeführt, welche in Schritt S134 als Ergebnis Daten für ein Satellitenmanöver sowie für die Mission liefert. Diese Daten fließen wieder als Eingabe in die Berechnung der Konfiguration des Gesamtsystems 1000 im Schritt S100. Diese Iteration wird solange durchgeführt, bis die gewünschte Bahnänderung des Satelliten für das PMD-Manöver erreicht wird.

Das Konfigurieren des Lasersystems 100 umfasst dabei wenigstens einen oder mehrere der Parameter Pulsenergie, Pulswiederholrate, Pulsdauer, Wellenlänge, Strahlqualität.

Das Konfigurieren der Bodenstation 200 umfasst wenigstens einen oder mehrere der Parameter Ort und Höhe der Bodenstation 200 über Meeresspiegel, Verfügbarkeit des Laserstrahls des Lasersystems 100 aufgrund von Wetterbedingungen.

Das Auslegen der optischen Übertragungsstrecke 120 umfasst wenigstens einen oder mehrere der Parameter, wie Durchmesser eines optischen Übertragungssystems 110, Unsicherheit und/oder zulässige Fehlertoleranzen der Laserstrahlverfolgung, Schwankungen der Strahlausrichtung, Kompensation von Turbulenzen, Durchmesser eines optischen Empfangssystems 140 (Figuren 1, 2).

Das Konfigurieren der Antriebseinheit 150 wenigstens einen oder mehrere der Parameter umfasst das Material eines Ablationskörpers 36 an der Antriebseinheit 150, und/oder die Größe eines Laserpunkts an der Antriebseinheit 150.

Zum Konfigurieren der Antriebseinheit 150 wird eine Wechselwirkung des Laserstrahls mit dem Material des Ablationskörpers 36 analysiert und/oder optimiert.

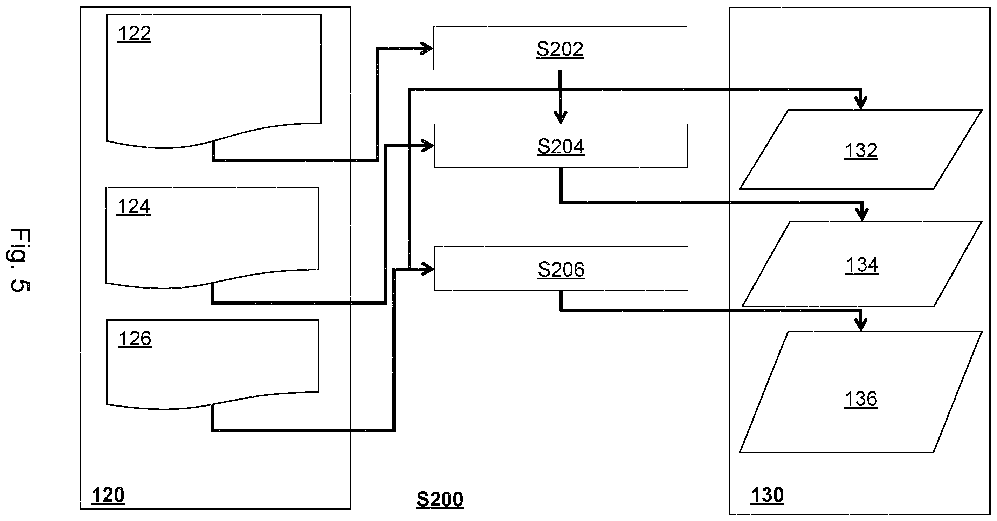

In Figur 5 ist ein Ablaufdiagramm zum Analysieren und Auslegen einer optischen Übertragungsstrecke 120 nach dem einen Ausführungsbeispiel des erfindungsgemäßen Verfahrens dargestellt.

Eine Analyse der optischen Übertragungsstrecke 120 wird unter Randbedingungen wenigstens bezüglich eines Überflugs des Satelliten 220 über die Bodenstation 200 (mit Randbedingung 122), bezüglich der Mission 240 (mit Randbedingung 124) und bezüglich des Lasersystems 100 (mit Randbedingung 126) durchgeführt.

Bewertungsfaktoren für die Analyse der optischen Übertragungsstrecke 120 umfassen dabei wenigstens eine oder mehrere der folgenden Bedingungen:
- Randbedingungen bezüglich des Laserstrahls, insbesondere eine Strahlqualität, optische Durchmesser des Laserstrahls beim Senden und/oder Empfangen, eine Leistungsfähigkeit einer adaptiven Optik, eine Ungenauigkeit beim Ausrichten des Laserstrahls;
- Randbedingungen bezüglich der Überflugbedingungen, insbesondere eine Bahnneigung und/oder Höhe, ein Ort und/oder Höhe des Lasersystems 100, ortsspezifische Wetterbedingungen wie Wolkenbedeckung und/oder Abschwächung durch Aerosole, eine minimale Elevation des Laserstrahls,
- die Konfiguration des Lasersystems 100, insbesondere Pulsenergie, Pulswiederholrate, Pulslänge, Wellenlänge.

Zur Analyse der optischen Übertragungsstrecke 120 wird im Block S200 des Ablaufdiagramms die Simulation der optischen Übertragungsstrecke 120 durchgeführt, wobei wenigstens die Schritte durchgeführt werden: Analysieren der Überflugbedingungen mit passender Elevation des Laserstrahls in Schritt S202; Analysieren einer Dauer einzelner Missionsphasen in Schritt S204; sowie Analysieren der Übertragung der Laserleistung in Schritt S206.

Randbedingungen 122 bezüglich des Überflugs umfassen Satellitenbahnparameter, Position des Satelliten, Wetterbedingungen, Leistungslimit des Laserstrahls und fließen in die Analyse der Überflugbedingungen in Schritt S202.

Randbedingungen 124 bezüglich der Mission umfassen eine maximale Dauer der PMD-Phase, Parameter des Satelliten, eine Satellitenbahnhöhe und fließen in die Analyse der Dauer der einzelnen Missionsphasen in Schritt S204.

Randbedingungen 126 bezüglich des Lasersystems umfassen eine Laserleistung, Parameter der Sendeeinheit, Parameter der Empfangseinheit und fließen in die Analyse der Übertragung der Laserleistung in Schritt S206.

Damit können Simulationsergebnisse 130 hinsichtlich der Dauer und der Bedingungen der Überflugphase 132, der benötigten Geschwindigkeitsreduzierung pro Überflugphase 134 sowie einer Effizienz 136 für die Transmission und der optischen Übertragung berechnet werden.

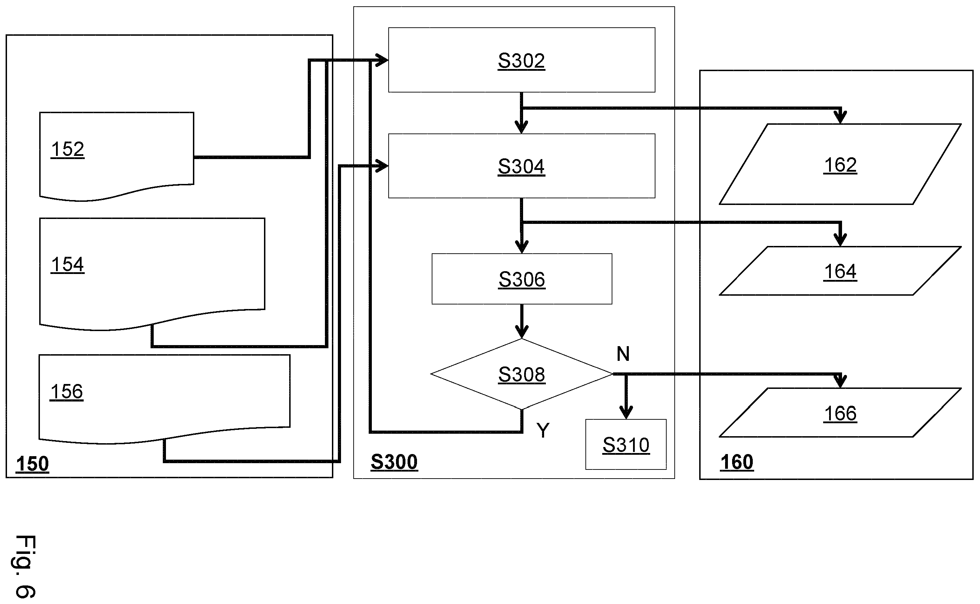

Figur 6 zeigt ein Ablaufdiagramm zum Konfigurieren einer satellitengestützten Antriebseinheit 150 nach einem Ausführungsbeispiel des erfindungsgemäßen Verfahrens.

Für eine Simulation der Antriebseinheit 150 werden im Block S300 weiter die folgenden Schritte durchgeführt.

In Schritt S302 wird die Wechselwirkung des Laserstrahls mit dem Material des Ablationskörpers 36 der Antriebseinheit 150 auf Basis der Konfiguration des Lasersystems 100 analysiert, insbesondere von geeigneten Lasertypen 152 bezüglich Pulsdauer und Wellenlänge, und/oder von Wechselwirkungsdaten 154 zwischen Laserstrahl und Ablationskörper 36 bezüglich Moment, übertragenem Impuls und entstehender Wärmeentwicklung. Damit ergibt sich als Simulationsergebnis 160 eine Auswahl geeigneter Laser/Antriebskombinationen 162.

In Schritt S304 wird die Oberflächenfluenz, also die eingestrahlte Energie pro Flächeneinheit, auf Basis der verfügbaren Konfigurationen 156 des Lasersystems 100, insbesondere der Pulsenergie und der Pulswiederholrate, optimiert.

In Schritt S306 wird die Auslegung der Mission 240 und die Leistung analysiert.

In Schritt S308 wird überprüft, ob die Genauigkeit der Simulationsergebnisse 160 verfeinert und/oder Parameter weiter optimiert werden sollen. Wenn dies der Fall ist, dann wird die Schleife S300 nochmal durchlaufen. Ansonsten wird die Simulation im Schritt S310 mit den vorläufigen Antriebsspezifikationen 166 beendet.

Figur 7 zeigt ein Ablaufdiagramm zum Durchführen von numerischen Simulationen nach einem Ausführungsbeispiel des erfindungsgemäßen Verfahrens.

Für eine Simulation des Satellitenmanövers ausgehend von einer Konfiguration des Gesamtsystems 1000 mit Bodenstation 200 mit Lasersystem 100, optischer Übertragungsstrecke 120, sowie Satellit 220, Satellitenbahn 230, Mission 240 und Antriebseinheit 150 werden im Block S400 die folgenden Schritte durchgeführt.

In Schritt S402 wird die Satellitenbahn in ersten Zeitschritten, insbesondere auf Minutenbasis berechnet. Danach erfolgt in Schritt S404 ein Abgleich mit Randbedingungen bezüglich der Mission 240 und/oder in Schritt S406 bezüglich des Überflugs über die Bodenstation 200, gefolgt von dem Berechnen der Satellitenbahn in zweiten, kleineren Zeitschritten, insbesondere auf Sekundenbasis oder angepasst an die Repetitionsrate des Lasers in Schritt S408. Danach erfolgt in Schritt S410 ein Abgleich mit Randbedingungen bezüglich der Lasereinstrahlung auf den Ablationskörper 36, gefolgt von einem Simulieren des Satellitenmanövers in Schritt S412.

Die Schritte S404 bis S412 werden iterativ durchgeführt, bis eine Übereinstimmung innerhalb von zulässigen Toleranzen mit den Randbedingungen der Mission 240 des Satelliten 220 erreicht wird. Dabei ist die Wahl des Zeitschrittes der Simulation an die iterative Überprüfung S406 der Überflugbedingungen des Satelliten 220 für jeden Zeitschritt gebunden, während die Modellierung S412 von Lasereinstrahlung und Satellitenmanöver an die Überprüfung der Randbedingungen S410 bezüglich der Lasereinstrahlung für jeden Zeitschritt eines Überflugs geknüpft ist.

Beim Berechnen der Satellitenbahn in den ersten, großen Zeitschritten im Schritt S402 wird, falls nach dem jeweiligen Zeitschritt in S404 keine Übereinstimmung mit den Randbedingungen der Mission 240 besteht, die Simulation im Schritt S414 beendet.

Anderenfalls wird, falls im Schritt S406 keine Übereinstimmung mit den Überflugbedingungen besteht, das Berechnen der Satellitenbahn in ersten, großen Zeitschritten mit dem Schritt S402 weitergeführt.

Besteht Übereinstimmung in Schritt S406 wird mit dem Berechnen der Satellitenbahn in zweiten, kleineren Zeitschritten im Schritt S408 fortgefahren.

Beim Berechnen der Satellitenbahn in zweiten, kleineren Zeitschritten im Schritt S408 wird, falls nach dem jeweiligen Zeitschritt in S410 keine Übereinstimmung mit den Randbedingungen bezüglich der Lasereinstrahlung auf den Ablationskörper 36 besteht, die Überprüfung auf die Überflugbedingungen im Schritt S406 neu durchgeführt.

Anderenfalls wird im Schritt S412 mit dem Simulieren des Satellitenmanövers fortgefahren.

Als Simulationsergebnisse 1100 werden die Historien 1102 der ermittelten Lasermanöver ausgegeben. Weiter werden Zusammenfassungen 1104 der Lasermanöver sowie eine Zusammenfassung 1106 der Mission ausgegeben.

Im Rahmen eines Ausführungsbeispiels für das Verfahren wurde beispielsweise als Material für den Ablationskörper Aluminium betrachtet, welches durch gepulste (Pulsdauer τ = 1 ns, Wellenlänge λ = 1064 nm, entsprechend einem Nd:YAG-Laser), von einer Laser-Bodenstation ausgesendeten Laserstrahlung abgetragen wird.

Dafür kann zuerst eine mögliche Missionsarchitektur für die Durchführung von PMD-Phasen entwickelt werden, innerhalb welcher von einer zweiphasigen PMD-Phase ausgegangen wird, wobei eine Bestrahlung des Satelliten nur in der ersten PMD-Phase vorgesehen ist. Die Satellitenbahn des Satelliten wird dabei durch aufeinanderfolgende Bestrahlungsmanöver sukzessive abgesenkt, bis sich dessen niedrigster Punkt in einer Höhe zwischen 200 und 300 km über der Erdoberfläche befindet.

Die Kombination aus Laser-Bodenstation und Satellit wird dabei zunächst mit Hilfe einfacher analytischer Abschätzungen abgeleitet. Dabei wird unter Berücksichtigung atmosphärischer Effekte zunächst eine Bodenstation abgeleitet, welche einen möglichst geringen Strahldurchmesser auf allen betrachteten Satellitenbahnen ermöglicht. Vor diesem Hintergrund wird dann eine geeignete Empfängeroptik auf dem Satelliten abgeleitet, welche einen möglichst guten Kompromiss zwischen Gewicht und Konstruktionsaufwand auf dem Satelliten ermöglicht.

Mit den auf diese Weise abgeleiteten Ergebnissen kann dann die Effizienz der Energieübertragung zwischen dem Satelliten und der Laser-Bodenstation abgeschätzt werden.

Darauf aufbauend können analytische Beziehungen abgeleitet werden, welche eine Vorauslegung des Lasersystems ermöglichen im Hinblick auf die erforderliche Repetitionsrate und Ausgangsleistung, Diese Formeln ermöglichen dabei eine Abschätzung des Leistungsbedarfes zur Einhaltung einer geforderten Dauer der PMD-Phase, sowie der dafür insgesamt zu ablatierenden Massen und maximal zu erwartenden Wärmeeinkopplung in den Ablationskörper. Dabei kann ein Referenz-Übertragungszustand betrachtet werden, um eine Vorauslegung der Laser-Bodenstation und des Satelliten zu ermöglichen.

Das auf diese Weise abgeleitete Antriebssystem wird anschließend mithilfe eines Bahnpropagationstools iterativ angepasst. Die entsprechende Software kann dabei diverse Näherungsfunktionen verwenden, um real auftretende, aber im Rahmen der analytischen Formeln nur schwer erfassbare, nichtlineare Effekte akkurat zu modellieren, z.B. die Abhängigkeit der Energieübertragungseffizienz vom Zenitwinkel zwischen dem Satelliten und der Laser-Bodenstation sowie den Parametern der Satellitenbahn. Nach einem definierten Vorgehen kann damit die real benötigte Ausgangsleistung des Lasersystems, sowie der real auftretende Massenbedarf und die dabei entstehenden Wärmelasten ermittelt werden.

Mithilfe dieser Ergebnisse kann dann ein reales Design einer möglichen Antriebseinheit abgeleitet werden. Dabei können auch Aspekte des Kontaminationsschutzes bezüglich der Laserablation explizit berücksichtigt werden. Mittels der abgeleiteten Auslegung der Antriebseinheit kann dann die Masse des gesamten Antriebssystems auf dem Satelliten abgeschätzt werden.

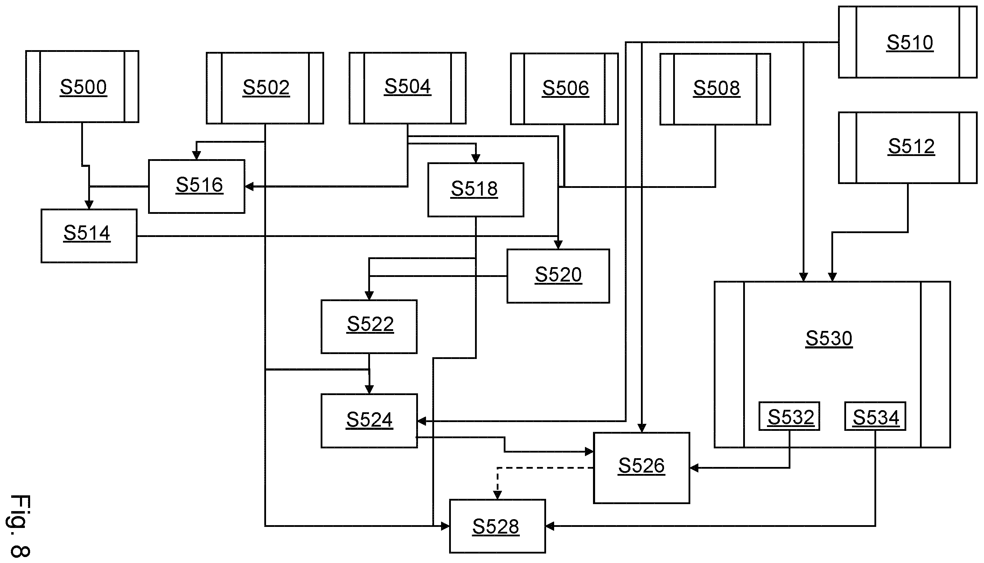

In Figur 8 ist dazu ein Systemdiagramm der numerischen Simulation nach dem erfindungsgemäßen Verfahren dargestellt.

Im Modul S500 wird die Zeitdauer für die PMD-Phase zur Verfügung gestellt und überprüft, ob diese kleiner als drei Jahre ist.

Im Modul S502 werden Satellitenparameter für die Masse des Satelliten, seine Querschnittsfläche und Strömungswiderstand sowie ein Durchmesser der Einfangfläche 28 bereitgestellt.

Im Modul S504 werden Parameter der initialen Satellitenbahn vorgegeben.

Im Modul S506 werden Atmosphärenparameter wie beispielsweise Wetterbedingungen und Laserstrahlanforderungen bereitgestellt.

Im Modul S508 werden Parameter der Bodenstation 200 bereitgestellt.

Im Modul S510 werden weitere Parameter des Lasersystems 100 der Bodenstation 200 bereitgestellt.

Im Modul S512 werden Parameter des Ablationskörpers 36 bereitgestellt.

Aus den Werten des Moduls S510 und S512 werden im Modul S530 die Ablationsparameter Impulskopplungskoeffizient S532 und spezifischer Impuls S534 berechnet. Der Impulskopplungskoeffizient S532 stellt den Quotienten aus dem erreichten Schub und der eingestrahlten Laserleistung dar. Der spezifische Impuls S534 stellt den Quotienten aus der Geschwindigkeit des Ablationsstrahls 38 und der Gravitationskonstanten g dar.

In den Schritten S514, bzw. S516 wird aus den Werten der Module S500 und S502, S504 eine maximale Zeitdauer der ersten PMD-Phase, bzw. eine Zeitdauer der zweiten PMD-Phase berechnet.

In Schritt S518 wird aus den Werten des Moduls S504 eine Anforderung an die Änderung der Bahngeschwindigkeit berechnet.

In Schritt S520 werden aus den Werten der Module S504, S506, S508 verfügbare Durchgänge des Satelliten 220 für die Lasereinstrahlung berechnet.

In Schritt S522 wird aus den vorigen Werten die benötigte Änderung der Bahngeschwindigkeit pro Durchgang des Satelliten 220 berechnet und damit in Schritt S524 der erforderliche Schub der Antriebseinheit 150 pro Laserpuls berechnet.

Aus dem erforderlichen Schub sowie den Werten des Moduls S510 und dem Ablationsparameter S532 wird in Schritt S526 die benötigte Energie, bzw. die benötigte Fluenz auf der Satellitenbahn berechnet.

Weiter kann aus diesen Werten des Schritts S526 und aus den Werten des Moduls S502, sowie dem Ergebnis des Schritts S518 und dem spezifischen Impuls S534 in Schritt S528 die geschätzte Masse der Antriebseinheit 150 berechnet werden.

### Bezugszeichen

- 10: Teleskop
- 12: Laser A
- 14: Laser B
- 16: Tracking-Laser
- 18: Leitstern-Laser
- 20: Optik
- 22: Laserstrahl
- 24: Atmosphäre
- 26: Teleskop
- 28: Strahlfang
- 30: Strahlführung
- 32: Umlenkspiegel
- 34: Laserstrahl
- 36: Ablationskörper
- 38: Ablationsstrahl
- 50: Einrichtung
- 60: Eigenschaften/Parameter
- 100: Lasersystem
- 110: Übertragungssystem
- 120: Optische Übertragungsstrecke
- 122: Randbedingungen Überflug
- 124: Randbedingungen Mission
- 126: Randbedingungen Lasersystem
- 130: Simulationsergebnisse
- 132: Überflugdauer
- 134: Geschwindigkeitsreduzierung pro Überflug
- 136: Effizienz
- 140: Empfangssystem
- 150: Antriebseinheit
- 152: Lasertypen
- 154: Laser/Material-Wechselwirkungsdaten
- 156: Laserkonfigurationen
- 160: Simulationsergebnisse
- 162: Auswahl Laser/Antriebskombinationen
- 164: Fluenz am Arbeitspunkt
- 166: Vorläufige Antriebsspezifikation

- 200: Laser-Bodenstation
- 202: Ort, Wetter
- 204: Verfahren
- 206: Ort, Apertur, Leistung
- 208: Ort, Apertur
- 210: Ausrichtung, Pulsdauer, Pulsenergie, Kadenz
- 212: Ausrichtung, Beschleunigung, Wärme

- 220: Satellit
- 230: Satellitenbahn
- 240: Mission

- 1000: Konfiguration Gesamtsystem
- 1100: Simulationsergebnisse
- 1102: Historien Lasermanöver
- 1104: Zusammenfassung Lasermanöver
- 1106: Zusammenfassung Mission

- S100: Konfigurationsschleife
- S102: Analyse opt. Übertragungsstrecke
- S120: Konfiguration Antriebseinheit
- S130: Analytische Berechnung
- S132: Numerische Simulation
- S134: Ergebnisse Manöver, Mission
- S200: Simulationsblock
- S202: Analysieren Überflugbedingungen
- S204: Analysieren Dauer Missionsphasen
- S206: Analysieren Übertragung Laserleistung

- S300: Simulationsblock
- S302: Analysieren Wechselwirkung Laserstrahl/Material
- S304: Optimierung Oberflächenfluenz
- S306: Analysieren Missionsauslegung und Leistung
- S308: Überprüfen Verfeinerung
- S310: Ende

- S400: Simulationsblock
- S402: Berechnen Satellitenbahn in großen Zeitschritten
- S404: Abgleich mit Randbedingungen der Mission
- S406: Abgleich mit Randbedingungen des Überflugs
- S408: Berechnen Satellitenbahn in kleinen Zeitschritten
- S410: Abgleich mit Randbedingungen der Lasereinstrahlung
- S412: Simulieren Satellitenmanöver
- S414: Ende

- S500: Zeitdauer PMD-Phase
- S502: Satellitenparameter
- S504: Initiale Satellitenbahn
- S506: Atmosphäre
- S508: Bodenstation
- S510: Bodenstation
- S512: Ablationskörper
- S514: max. Dauer erste Phase
- S516: Dauer zweite Phase
- S518: Anforderung Geschwindigkeitsänderung
- S520: Verfügbare Durchgänge
- S522: Benötigte Geschwindigkeitsänderung pro Durchgang
- S524: Erforderlicher Schub
- S526: Benötigte Energie, Fluenz
- S528: geschätzte Masse Satellit
- S530: Ablationsparameter
- S532: Impulskopplungskoeffizient
- S534: Spezifischer Impuls

## Patentansprüche

1. Computerimplementiertes Verfahren zur Planung eines Satellitenmanövers in Form einer Bahnänderung einer Satellitenbahn nach Abschluss einer Mission (240), wobei der Satellit (220) eine Antriebseinheit (150) mit bodengestützter Energieversorgung aufweist, wenigstens umfassend die Schritte
- Konfigurieren wenigstens eines bodengestützten Lasersystems (100) zur Erzeugung eines Laserstrahls, insbesondere von Laserpulsen;
- Konfigurieren wenigstens einer Laser-Bodenstation (200) einschließlich des wenigstens einen Lasersystems (100);
- Auslegen einer optischen Übertragungsstrecke (120) zum Übertragen der Laserpulse von der wenigstens einen Bodenstation (200) zum Satelliten (220);
- Konfigurieren der satellitengestützten Antriebseinheit (150), insbesondere eines Ablationsantriebs, bei welchem mittels der Laserpulse Masse von der Antriebseinheit (150) abgetragen wird;
- Bestimmen einer mittels der Antriebseinheit (150) erreichbaren Bahnkurve,
wobei die Schritte in einer Iteration so lange durchlaufen werden, bis die bestimmte erreichbare Bahnkurve einer gewünschten Bahnänderung für das Satellitenmanöver entspricht, wobei beim Durchlaufen der Iteration zum Bestimmen der Bahnkurve wenigstens die Schritte durchgeführt werden
- Initialisieren einer Konfiguration der Antriebseinheit (150) mit Daten einer ersten Analyse der optischen Übertragungsstrecke (120);
- Abgleich von berechneten Bahndaten des Satelliten (200) mit Anforderungen der Mission (240);
- Iterieren der Konfiguration der Antriebseinheit (150), der Konfiguration des Lasersystems (100), sowie der optischen Übertragungsstrecke (120) in einer numerischen Simulation, bis eine Übereinstimmung der berechneten Bahndaten mit den Anforderungen der Mission (240) innerhalb vorgegebener zulässiger Toleranzen erreicht ist.

2. Computerimplementiertes Verfahren nach Anspruch 1, wobei das Konfigurieren des wenigstens einen Lasersystems (100) wenigstens einen oder mehrere der Parameter umfasst
- Pulsenergie,
- Pulswiederholrate,
- mittlere Laserleistung,
- Pulsdauer,
- Wellenlänge,
- Strahlparameterprodukt.

3. Computerimplementiertes Verfahren nach Anspruch 1 oder 2, wobei das Konfigurieren der wenigstens einen Bodenstation (200) wenigstens einen oder mehrere der Parameter umfasst
- Ort und Höhe der Bodenstation (200) über Meeresspiegel,
- Verfügbarkeit des Laserstrahls des Lasersystems (100) aufgrund von Wetterbedingungen.

4. Computerimplementiertes Verfahren nach einem der vorhergehenden Ansprüche, wobei das Auslegen der optischen Übertragungsstrecke (120) wenigstens einen oder mehrere der Parameter umfasst
- Durchmesser eines optischen Übertragungssystems (110),
- Unsicherheit und/oder zulässige Fehlertoleranzen der Laserstrahlverfolgung,
- Strahlausrichtungsschwankungen,
- Kompensation von Turbulenzen,
- Durchmesser eines optischen Empfangssystems (140).

5. Computerimplementiertes Verfahren nach einem der vorhergehenden Ansprüche, wobei das Konfigurieren der Antriebseinheit (150) wenigstens einen oder mehrere der Parameter umfasst
- Material eines Ablationskörpers (36) an der Antriebseinheit (150),
- Größe eines Laserpunkts an der Antriebseinheit (150).

6. Computerimplementiertes Verfahren nach Anspruch 5, wobei zum Konfigurieren der Antriebseinheit (150) eine Wechselwirkung des Laserstrahls mit dem Material des Ablationskörpers (36) analysiert und/oder optimiert wird.

7. Computerimplementiertes Verfahren nach einem der vorhergehenden Ansprüche, wobei eine Analyse der optischen Übertragungsstrecke (120) unter Randbedingungen wenigstens bezüglich eines Überflugs des Satelliten (220) über die wenigstens eine Bodenstation (200) und/oder bezüglich der Mission (240) und/oder bezüglich des Lasersystems (100) durchgeführt wird.

8. Computerimplementiertes Verfahren nach Anspruch 7, wobei Bewertungsfaktoren für die Analyse der optischen Übertragungsstrecke (120) wenigstens eine oder mehrere der Bedingungen umfassen
- Randbedingungen bezüglich des Laserstrahls, insbesondere eine Strahlqualität, optische Durchmesser des Laserstrahls beim Senden und/oder Empfangen, eine Leistungsfähigkeit einer adaptiven Optik, eine Ungenauigkeit beim Ausrichten des Laserstrahls,
- Randbedingungen bezüglich der Überflugbedingungen, insbesondere eine Bahnneigung und/oder Höhe, ein Ort und/oder Höhe des Lasersystems (100), ortsspezifische Wetterbedingungen wie Wolkenbedeckung und/oder Abschwächung durch Aerosole, eine minimale Elevation des Laserstrahls,
- die Konfiguration des Lasersystems (100), insbesondere Pulsenergie, Pulswiederholrate, Pulslänge, Wellenlänge.

9. Computerimplementiertes Verfahren nach Anspruch 7 oder 8, wobei für die Analyse der optischen Übertragungsstrecke (120) eine Simulation der optischen Übertragungsstrecke (120) durchgeführt wird, wobei wenigstens die Schritte durchgeführt werden
- Analysieren der Überflugbedingungen mit passender Elevation des Laserstrahls;
- Analysieren einer Dauer einzelner Missionsphasen;
- Analysieren der Übertragung der Laserleistung.

10. Computerimplementiertes Verfahren nach einem der vorhergehenden Ansprüche, wobei für eine Simulation der Antriebseinheit (150) weiter die Schritte durchgeführt werden
- Analysieren der Wechselwirkung des Laserstrahls mit dem Material des Ablationskörpers (36) der Antriebseinheit (150) auf Basis der Konfiguration des Lasersystems (100), insbesondere von geeigneten Lasertypen bezüglich Pulsdauer und Wellenlänge, und/oder von Wechselwirkungsdaten zwischen Laserstrahl und Ablationskörper (36) bezüglich übertragenem Impuls und entstehender Wärmeentwicklung;
- Optimieren einer Oberflächenfluenz auf Basis der verfügbaren Konfiguration des Lasersystems (100), insbesondere der Pulsenergie und der Pulswiederholrate;
- Konzipieren der Mission (240) und Analysieren der Leistung,
wobei die Simulationsschritte iteriert werden, bis eine genügende Verfeinerung der Parameter innerhalb von zulässigen Toleranzen erreicht ist.

11. Computerimplementiertes Verfahren nach einem der vorhergehenden Ansprüche, wobei für eine Simulation des Satellitenmanövers weiter die Schritte durchgeführt werden
- Berechnen der Satellitenbahn in ersten Zeitschritten, insbesondere auf Minutenbasis;
- Abgleich mit Randbedingungen bezüglich der Mission (240) und/oder des Überflugs über die wenigstens eine Bodenstation (200);
- Berechnen der Satellitenbahn in zweiten, kleineren Zeitschritten, insbesondere auf Sekundenbasis oder angepasst an eine Repetitionsrate des wenigstens einen Lasersystems (100);
- Abgleich mit Randbedingungen bezüglich der Lasereinstrahlung auf den Ablationskörper (36);
- Simulieren des Satellitenmanövers,
wobei die Schritte iterativ durchgeführt werden, bis eine Übereinstimmung innerhalb von zulässigen Toleranzen mit den Randbedingungen der Mission (240) des Satelliten (220) und/oder der Überflugbedingungen des Satelliten (220) und/oder der Lasereinstrahlung erreicht wird.

12. Computerimplementiertes Verfahren nach Anspruch 11, wobei nach dem Berechnen der Satellitenbahn in ersten, großen Zeitschritten,
- falls keine Übereinstimmung mit den Randbedingungen der Mission (240) besteht, die Simulation abgebrochen wird;
- anderenfalls, falls keine Übereinstimmung mit den Randbedingungen der Überflugbedingungen besteht, das Berechnen der Satellitenbahn in ersten, großen Zeitschritten fortgeführt wird;
- falls Übereinstimmung mit den Überflugbedingungen besteht, mit dem Berechnen der Satellitenbahn in zweiten, kleineren Zeitschritten fortgefahren wird.

13. Computerimplementiertes Verfahren nach Anspruch 11 oder 12, wobei bei dem Berechnen der Satellitenbahn in zweiten, kleineren Zeitschritten,
- falls keine Übereinstimmung mit den Randbedingungen bezüglich der Lasereinstrahlung auf den Ablationskörper (36) besteht, die Überprüfung auf die Randbedingungen der Überflugbedingungen im nächsten Zeitschritt erneut durchgeführt wird;
- anderenfalls mit dem Simulieren des Satellitenmanövers fortgefahren wird.

14. Computer-Programm-Produkt zur Planung eines Satellitenmanövers in Form einer Bahnänderung einer Satellitenbahn nach Abschluss einer Mission (240), mit einem Verfahren nach einem der vorhergehenden Ansprüche, wobei der Satellit (220) eine Antriebseinheit (150) mit bodengestützter Energieversorgung aufweist, wobei das Computer-Programm-Produkt wenigstens ein computerlesbares Speichermedium umfasst, welches Programmbefehle umfasst, die auf einem Computersystem ausführbar sind und das Computersystem dazu veranlassen, das Verfahren auszuführen, wobei wenigstens die Schritte ausgeführt werden
- Konfigurieren wenigstens eines bodengestützten Lasersystems (100) zur Erzeugung eines Laserstrahls, insbesondere von Laserpulsen;
- Konfigurieren wenigstens einer Laser-Bodenstation (200) einschließlich des wenigstens einen Lasersystems (100);
- Auslegen einer optischen Übertragungsstrecke (120) zum Übertragen der Laserpulse von der wenigstens einen Bodenstation (200) zum Satelliten (220);
- Konfigurieren der satellitengestützten Antriebseinheit (150), insbesondere eines Ablationsantriebs, bei welchem mittels der Laserpulse Masse von der Antriebseinheit (150) abgetragen wird;
- Bestimmen einer mittels der Antriebseinheit (150) erreichbaren Bahnkurve,
wobei die Schritte in einer Iteration so lange durchlaufen werden, bis die bestimmte erreichbare Bahnkurve einer gewünschten Bahnänderung für das Satellitenmanöver entspricht,
wobei beim Durchlaufen der Iteration zum Bestimmen der Bahnkurve wenigstens die Schritte durchgeführt werden
- Initialisieren einer Konfiguration der Antriebseinheit (150) mit Daten einer ersten Analyse der optischen Übertragungsstrecke (120);
- Abgleich von berechneten Bahndaten des Satelliten (200) mit Anforderungen der Mission (240);
Iterieren der Konfiguration der Antriebseinheit (150), der Konfiguration des Lasersystems (100), sowie der optischen Übertragungsstrecke (120) in einer numerischen Simulation, bis eine Übereinstimmung der berechneten Bahndaten mit den Anforderungen der Mission (240) innerhalb vorgegebener zulässiger Toleranzen erreicht ist.

15. Datenverarbeitungssystem zur Ausführung eines Datenverarbeitungsprogramms, wobei das Datenverarbeitungssystem das Datenverarbeitungsprogramm umfasst, welches computerlesbare Programmbefehle umfasst, um ein Verfahren zur Planung eines Satellitenmanövers in Form einer Bahnänderung einer Satellitenbahn nach Abschluss einer Mission (240) nach einem der Ansprüche 1-13 auszuführen, wobei der Satellit (220) eine Antriebseinheit (150) mit bodengestützter Energieversorgung aufweist.

## Claims

1. Computer-implemented method for planning a satellite manoeuvre in the form of an orbit change to a satellite orbit after completing a mission (240), wherein the satellite (220) has a drive unit (150) with a ground-based energy supply, at least comprising the steps of
- configuring at least one ground-based laser system (100) for generating a laser beam, in particular laser pulses;
- configuring at least one laser ground station (200) including the at least one laser system (100);
- designing an optical transmission path (120) for transmitting the laser pulses from the at least one ground station (200) to the satellite (220);
- configuring the satellite-based drive unit (150), in particular an ablation drive, in which mass is removed from the drive unit (150) by means of the laser pulses;
- determining a trajectory which can be achieved by means of the drive unit (150),
wherein the steps are run through in an iteration until the determined achievable trajectory corresponds to a desired orbit change for the satellite manoeuvre, wherein at least the following steps are carried out when running through the iteration for determining the trajectory
- initializing a configuration of the drive unit (150) with data from a first analysis of the optical transmission path (120);
- comparing calculated orbit data relating to the satellite (200) with requirements of the mission (240);
- iterating the configuration of the drive unit (150), the configuration of the laser system (100), and the optical transmission path (120) in a numerical simulation until the calculated orbit data correspond to the requirements of the mission (240) within predefined permissible tolerances.

2. Computer-implemented method according to Claim 1, wherein the configuration of the at least one laser system (100) comprises at least one or more of the following parameters
- pulse energy,
- pulse repetition rate,
- mean laser power,
- pulse duration,
- wavelength,
- beam parameter product.

3. Computer-implemented method according to Claim 1 or 2, wherein the configuration of the at least one ground station (200) comprises at least one or more of the following parameters
- the location and height of the ground station (200) above sea level,
- availability of the laser beam of the laser system (100) due to weather conditions.

4. Computer-implemented method according to one of the preceding claims, wherein the design of the optical transmission path (120) comprises at least one or more of the following parameters
- diameter of an optical transmission system (110),
- uncertainty and/or permissible fault tolerances of laser beam tracking,
- beam alignment fluctuations,
- compensation for turbulence,
- diameter of an optical reception system (140).

5. Computer-implemented method according to one of the preceding claims, wherein the configuration of the drive unit (150) comprises at least one or more of the following parameters
- material of an ablation body (36) on the drive unit (150),
- size of a laser dot on the drive unit (150).

6. Computer-implemented method according to Claim 5, wherein an interaction between the laser beam and the material of the ablation body (36) is analysed and/or optimized for the purpose of configuring the drive unit (150).

7. Computer-implemented method according to one of the preceding claims, wherein the optical transmission path (120) is analysed under boundary conditions at least with respect to an overflight of the satellite (220) over the at least one ground station (200) and/or with respect to the mission (240) and/or with respect to the laser system (100).

8. Computer-implemented method according to Claim 7, wherein evaluation factors for analysing the optical transmission path (120) comprise at least one or more of the following conditions
- boundary conditions with respect to the laser beam, in particular a beam quality, optical diameter of the laser beam when transmitting and/or receiving, performance of an adaptive optical system, an inaccuracy when aligning the laser beam,
- boundary conditions with respect to the overflight conditions, in particular an orbit inclination and/or altitude, a location and/or altitude of the laser system (100), location-specific weather conditions such as cloud cover and/or attenuation by aerosols, a minimum elevation of the laser beam,
- the configuration of the laser system (100), in particular pulse energy, pulse repetition rate, pulse length, wavelength.

9. Computer-implemented method according to Claim 7 or 8, wherein the optical transmission path (120) is simulated for analysing the optical transmission path (120), wherein at least the following steps are carried out
- analysing the overflight conditions with appropriate elevation of the laser beam;
- analysing a duration of individual mission phases;
- analysing the transmission of the laser power.

10. Computer-implemented method according to one of the preceding claims, wherein the following steps are also carried out for simulating the drive unit (150)
- analysing the interaction between the laser beam and the material of the ablation body (36) of the drive unit (150) on the basis of the configuration of the laser system (100), in particular suitable laser types with regard to pulse duration and wavelength, and/or interaction data between the laser beam and the ablation body (36) with regard to a transmitted pulse and resulting heat generation;
- optimizing a surface fluence on the basis of the available configuration of the laser system (100), in particular the pulse energy and the pulse repetition rate;
- designing the mission (240) and analysing the performance,
wherein the simulation steps are iterated until a sufficient refinement of the parameters has been achieved within permissible tolerances.

11. Computer-implemented method according to one of the preceding claims, wherein the following steps are also carried out for simulating the satellite manoeuvre
- calculating the satellite orbit in first time steps, in particular on a minute basis;
- comparing it with boundary conditions with respect to the mission (240) and/or the overflight over the at least one ground station (200);
- calculating the satellite orbit in second, smaller time steps, in particular on a second basis or in a manner adjusted to a repetition rate of the at least one laser system (100);
- comparing it with boundary conditions with respect to the laser irradiation of the ablation body (36);
- simulating the satellite manoeuvre,
wherein the steps are carried out iteratively until a correspondence within permissible tolerances to the boundary conditions of the mission (240) of the satellite (220) and/or the overflight conditions of the satellite (220) and/or the laser irradiation is achieved.

12. Computer-implemented method according to Claim 11, wherein, after calculating the satellite orbit in first, large time steps,
- if there is no correspondence to the boundary conditions of the mission (240), the simulation is aborted;
- otherwise, if there is no correspondence to the boundary conditions of the overflight conditions, the calculation of the satellite orbit is continued in first, large time steps;
- if there is correspondence to the overflight conditions, the calculation of the satellite orbit is continued in second, smaller time steps.

13. Computer-implemented method according to Claim 11 or 12, wherein, when calculating the satellite orbit in second, smaller time steps,
- if there is no correspondence to the boundary conditions with respect to the laser irradiation of the ablation body (36), the check for the boundary conditions of the overflight conditions will be carried out again in the next time step;
- otherwise, the simulation of the satellite manoeuvre is continued.

14. Computer program product for planning a satellite manoeuvre in the form of an orbit change to a satellite orbit after completing a mission (240), with a method according to one of the preceding claims, wherein the satellite (220) has a drive unit (150) with a ground-based energy supply, wherein the computer program product comprises at least one computer-readable storage medium comprising program instructions which are executable on a computer system and cause the computer system to perform the method, wherein at least the following steps are performed
- configuring at least one ground-based laser system (100) for generating a laser beam, in particular laser pulses;
- configuring at least one laser ground station (200) including the at least one laser system (100);
- designing an optical transmission path (120) for transmitting the laser pulses from the at least one ground station (200) to the satellite (220);
- configuring the satellite-based drive unit (150), in particular an ablation drive, in which mass is removed from the drive unit (150) by means of the laser pulses;
- determining a trajectory which can be achieved by means of the drive unit (150),
wherein the steps are run through in an iteration until the determined achievable trajectory corresponds to a desired orbit change for the satellite manoeuvre,
wherein at least the following steps are carried out when running through the iteration for determining the trajectory
- initializing a configuration of the drive unit (150) with data from a first analysis of the optical transmission path (120);
- comparing calculated orbit data relating to the satellite (200) with requirements of the mission (240);
iterating the configuration of the drive unit (150), the configuration of the laser system (100), and the optical transmission path (120) in a numerical simulation until the calculated orbit data correspond to the requirements of the mission (240) within predefined permissible tolerances.

15. Data processing system for executing a data processing program, wherein the data processing system comprises the data processing program which comprises computer-readable program instructions for performing a method for planning a satellite manoeuvre in the form of an orbit change to a satellite orbit after completing a mission (240) according to one of Claims 1-13, wherein the satellite (220) has a drive unit (150) with a ground-based energy supply.

## Revendications

1. Procédé mis en œuvre par ordinateur pour la planification d'une manœuvre de satellite sous la forme d'une modification de trajectoire d'une trajectoire d'un satellite après la fin d'une mission (240), le satellite (220) présentant une unité de propulsion (150) dotée d'une alimentation en énergie à assistance terrestre, comprenant au moins les étapes suivantes
- configuration d'au moins un système laser (100) à assistance terrestre pour générer un faisceau laser, en particulier des impulsions laser ;
- configuration d'au moins une station au sol laser (200) comprenant l'au moins un système laser (100) ;
- établissement d'un trajet de transmission optique (120) servant à transmettre les impulsions laser de l'au moins une station au sol (200) vers le satellite (220) ;
- configuration de l'unité de propulsion assistée par satellite (150), en particulier d'une unité de propulsion par ablation, avec laquelle de la matière est retirée de l'unité de propulsion (150) au moyen des impulsions laser ;
- détermination d'une courbe de trajectoire pouvant être atteinte au moyen de l'unité de propulsion (150),
les étapes étant exécutées dans une itération jusqu'à ce que la courbe de trajectoire pouvant être atteinte déterminée corresponde à une modification de trajectoire souhaitée pour la manœuvre de satellite, l'exécution de l'itération pour déterminer la courbe de trajectoire comprenant au moins les étapes suivantes
- initialisation d'une configuration de l'unité de propulsion (150) avec les données d'une première analyse du trajet de transmission optique (120) ;
- ajustement des données de trajectoire calculées du satellite (200) par rapport aux exigences de la mission (240) ;
- itération de la configuration de l'unité de propulsion (150), de la configuration du système laser (100), ainsi que du trajet de transmission optique (120) dans une simulation numérique, jusqu'à ce qu'une correspondance des données de trajectoire calculées avec les exigences de la mission (240) soit atteinte conformément à des tolérances admissibles préétablies.

2. Procédé mis en œuvre par ordinateur selon la revendication 1, dans lequel la configuration de l'au moins un système laser (100) comprend au moins un ou plusieurs des paramètres suivants
- énergie d'impulsion,
- fréquence de répétition des impulsions,
- puissance laser moyenne,
- durée d'impulsion,
- longueur d'onde,
- produit de paramètres de faisceau.

3. Procédé mis en œuvre par ordinateur selon la revendication 1 ou 2, dans lequel la configuration de l'au moins une station au sol (200) comprend au moins un ou plusieurs des paramètres suivants
- emplacement et altitude de la station au sol (200) au-dessus du niveau de la mer,
- disponibilité du faisceau laser du système laser (100) en raison de conditions météorologiques.

4. Procédé mis en œuvre par ordinateur selon l'une des revendications précédentes, dans lequel l'établissement du trajet de transmission optique (120) comprend au moins un ou plusieurs des paramètres suivants
- diamètre d'un système de transmission optique (110),
- incertitude et/ou tolérances d'erreur admissibles de la poursuite du faisceau laser,
- fluctuations d'orientation du faisceau,
- compensation des turbulences,
- diamètre d'un système de réception optique (140).

5. Procédé mis en œuvre par ordinateur selon l'une des revendications précédentes, dans lequel la configuration de l'unité de propulsion (150) comprend au moins un ou plusieurs des paramètres suivants
- matériau d'un corps d'ablation (36) sur l'unité de propulsion (150),
- taille d'un point laser sur l'unité de propulsion (150).

6. Procédé mis en œuvre par ordinateur selon la revendication 5, dans lequel, pour la configuration de l'unité de propulsion (150), une interaction du faisceau laser avec le matériau du corps d'ablation (36) est analysée et/ou optimisée.

7. Procédé mis en œuvre par ordinateur selon l'une des revendications précédentes, dans lequel une analyse du trajet de transmission optique (120) est effectuée conformément à des conditions aux limites relatives au moins à un survol du satellite (220) au-dessus de l'au moins une station au sol (200) et/ou relatives à la mission (240) et/ou relatives au système laser (100).

8. Procédé mis en œuvre par ordinateur selon la revendication 7, dans lequel les facteurs d'évaluation pour l'analyse du trajet de transmission optique (120) comprennent au moins une ou plusieurs des conditions suivantes
- les conditions aux limites relatives au faisceau laser, en particulier une qualité du faisceau, des diamètres optiques du faisceau laser lors de l'émission et/ou de la réception, les performances d'une optique adaptative, une imprécision d'alignement du faisceau laser,
- les conditions aux limites relatives aux conditions de survol, en particulier une inclinaison de l'orbite et/ou une altitude, un emplacement et/ou une altitude du système laser (100), des conditions météorologiques spécifiques au site comme la couverture nuageuse et/ou l'atténuation par les aérosols, une élévation minimale du faisceau laser,
- la configuration du système laser (100), en particulier l'énergie d'impulsion, la fréquence de répétition des impulsions, la durée d'impulsion, la longueur d'onde.

9. Procédé mis en œuvre par ordinateur selon la revendication 7 ou la revendication 8, dans lequel, pour l'analyse du trajet de transmission optique (120), une simulation du trajet de transmission optique (120) est effectuée, et dans lequel au moins les étapes suivantes sont effectuées
- analyse des conditions de survol avec une élévation appropriée du faisceau laser ;
- analyse de la durée de phases individuelles de la mission ;
- analyse de la transmission de la puissance laser.

10. Procédé mis en œuvre par ordinateur selon l'une des revendications précédentes, dans lequel, pour une simulation de l'unité de propulsion (150), les étapes suivantes sont en outre effectuées
- analyse de l'interaction du faisceau laser avec le matériau du corps d'ablation (36) de l'unité de propulsion (150) sur la base de la configuration du système laser (100), en particulier de types de laser appropriés en ce qui concerne la durée d'impulsion et la longueur d'onde, et/ou de données d'interaction entre le faisceau laser et le corps d'ablation (36) en ce qui concerne l'impulsion transmise et la chaleur dégagée ;
- optimisation d'une fluence de surface sur la base de la configuration disponible du système laser (100), en particulier de l'énergie d'impulsion et de la fréquence de répétition des impulsions ;
- conception de la mission (240) et analyse de la puissance,
les étapes de simulation étant répétées jusqu'à ce qu'un raffinement suffisant des paramètres soit atteint dans les tolérances admissibles.

11. Procédé mis en œuvre par ordinateur selon l'une des revendications précédentes, dans lequel, pour une simulation de la manœuvre de satellite, les étapes suivantes sont en outre effectuées
- calcul de la trajectoire du satellite à des premiers pas de temps, en particulier à la minute ;
- ajustement selon les conditions aux limites relatives à la mission (240) et/ou au survol de l'au moins une station au sol (200) ;
- calcul de la trajectoire du satellite à des seconds pas de temps plus petits, en particulier à la seconde ou adaptés à une fréquence de répétition de l'au moins un système laser (100) ;
- ajustement selon les conditions aux limites relatives à l'irradiation laser sur le corps d'ablation (36) ;
- simulation de la manœuvre de satellite,
les étapes étant effectuées de manière itérative jusqu'à ce qu'une correspondance conforme aux tolérances admissibles soit atteinte avec les conditions aux limites de la mission (240) du satellite (220) et/ou des conditions de survol du satellite (220) et/ou de l'irradiation laser.

12. Procédé mis en œuvre par ordinateur selon la revendication 11, dans lequel, après le calcul de la trajectoire du satellite à des premiers grands pas de temps,
- s'il n'existe aucune correspondance avec les conditions aux limites de la mission (240), la simulation est interrompue ;
- sinon, s'il n'existe aucune correspondance avec les conditions aux limites des conditions de survol, le calcul de la trajectoire du satellite à des premiers grands pas de temps est poursuivi ;
- s'il existe une correspondance avec les conditions de survol, on procède au calcul de la trajectoire du satellite à des seconds pas de temps plus petits.

13. Procédé mis en œuvre par ordinateur selon la revendication 11 ou la revendication 12, dans lequel lors du calcul de la trajectoire du satellite à des seconds pas de temps plus petits,
- s'il n'existe aucune correspondance avec les conditions aux limites relatives à l'irradiation laser sur le corps d'ablation (36), la vérification des conditions aux limites des conditions de survol est effectuée à nouveau au prochain pas de temps ;
- sinon, la simulation de la manœuvre de satellite est poursuivie.

14. Produit-programme informatique pour la planification d'une manœuvre de satellite sous la forme d'une modification de trajectoire d'une trajectoire d'un satellite après la fin d'une mission (240), au moyen d'un procédé selon l'une des revendications précédentes, le satellite (220) présentant une unité de propulsion (150) dotée d'une alimentation en énergie à assistance terrestre, dans lequel le produit-programme informatique comprend au moins un support de stockage lisible par ordinateur qui comprend des instructions de programme exécutables sur un système informatique et qui amènent le système informatique à mettre en œuvre le procédé, au moins les étapes suivantes étant effectuées
- configuration d'au moins un système laser (100) à assistance terrestre pour générer un faisceau laser, en particulier des impulsions laser ;
- configuration d'au moins une station au sol laser (200) comprenant l'au moins un système laser (100) ;
- établissement d'un trajet de transmission optique (120) servant à transmettre les impulsions laser de l'au moins une station au sol (200) vers le satellite (220) ;
- configuration de l'unité de propulsion assistée par satellite (150), en particulier d'une unité de propulsion par ablation, avec laquelle de la matière est retirée de l'unité de propulsion (150) au moyen des impulsions laser ;
- détermination d'une courbe de trajectoire pouvant être atteinte au moyen de l'unité de propulsion (150),
les étapes étant exécutées dans une itération jusqu'à ce que la courbe de trajectoire pouvant être atteinte déterminée corresponde à une modification de trajectoire souhaitée pour la manœuvre de satellite,
l'exécution de l'itération pour déterminer la courbe de trajectoire comprenant au moins les étapes suivantes
- initialisation d'une configuration de l'unité de propulsion (150) avec les données d'une première analyse du trajet de transmission optique (120) ;
- ajustement des données de trajectoire calculées du satellite (200) par rapport aux exigences de la mission (240) ;
itération de la configuration de l'unité de propulsion (150), de la configuration du système laser (100), ainsi que du trajet de transmission optique (120) dans une simulation numérique, jusqu'à ce qu'une correspondance des données de trajectoire calculées avec les exigences de la mission (240) soit atteinte conformément à des tolérances admissibles préétablies.

15. Système de traitement de données pour l'exécution d'un programme de traitement de données, dans lequel le système de traitement de données comprend le programme de traitement de données, lequel comprend des instructions de programme lisibles par ordinateur, afin de mettre en œuvre un procédé pour la planification d'une manœuvre de satellite sous la forme d'une modification de la trajectoire d'une trajectoire d'un satellite après la fin d'une mission (240) selon l'une des revendications 1 à 13, le satellite (220) présentant une unité de propulsion (150) dotée d'une alimentation en énergie à assistance terrestre.
